# EUROPÄISCHE PATENTSCHRIFT

(11) **EP 1 982 296 B1**
(45) Veröffentlichungstag und Bekanntmachung des Hinweises auf die Patenterteilung: **07.12.2011**
(21) Anmeldenummer: 07703372.8
(22) Anmeldetag: 09.02.2007
(51) Int. Cl.: G06K 19/06, G06K 19/16

(54) **MEHRSCHICHTKÖRPER MIT EINER OPTISCH MASCHINELL LESBAREN KENNUNG**
MULTILAYER ELEMENT WITH AN IDENTIFICATION WHICH CAN BE READ OPTICALLY BY A MACHINE
CORPS MULTICOUCHE COMPORTANT UN IDENTIFIANT LISIBLE OPTIQUEMENT À L'AIDE D'UN APPAREIL

(30) Priorität: 11.02.2006 DE 102006006323
(43) Veröffentlichungstag der Anmeldung: 22.10.2008
(73) Patentinhaber: OVD Kinegram AG, 6301 Zug (CH)
(72) Erfinder: TOMPKIN, Wayne, Robert, CH-5400 Baden (CH); PETERS, John Anthony, 8804 Au (CH)
(74) Vertreter: Zinsinger, Norbert
(86) Internationale Anmeldenummer: PCT/EP2007/001098
(87) Internationale Veröffentlichungsnummer: WO 2007/090656

(56) Entgegenhaltungen:
- EP-A1- 0 718 795
- WO-A-03/027952
- DE-A1- 19 924 750

## Beschreibung

Die Erfindung betrifft einen Mehrschichtkörper mit einer optisch maschinell lesbaren Kennung, ein Verfahren zur Herstellung eines solchen Mehrschichtkörpers sowie ein Verfahren zum Auslesen einer Information aus einem solchen Mehrschichtkörper.

Aus der EP 0 718 795 A1 ist ein Informationsstreifen mit optisch codierter Information bekannt. Optische Markierungen sind auf dem Informationsstreifen in Bit-Zeilen angeordnet, wobei wenigstens zwei Bit-Zeilen mit identischer Einteilung in gleich große Flächenteile benötigt werden. Jedes Flächenteil ist beispielsweise mit einem optischen Beugungselement belegt. Die Beugungselemente der einen Bit-Zeile weisen die gleichen Gitterparameter (Spatialfrequenz, Profilform, Azimut usw.) auf und unterscheiden sich von den Beugungselementen der benachbarten anderen Bit-Zeile. Jeweils ein Flächenteil aus der einen Bitzeile bildet mit dem benachbarten Flächenteil aus der anderen Bit-Zeile ein Bit-Paar, das ein einzelnes Bit der Information darstellt. Bei diesem Informationsstreifen läßt sich nach der Herstellung eine Information einmal einschreiben, wobei bei dem Einschreiben in einem der beiden Flächenteile des Bit-Paares das optische Verhalten des Flächenteils irreversibel verändert wird.

Aus der EP 0 883 085 A1 ist bekannt, daß jedes Flächenteil eines einzeiligen Informationsstreifens eine Vielzahl von Teilflächen aufweist, die abwechselnd mit einem von zwei verschiedenen optischen Beugungselementen aus einer Menge von n Beugungselementen belegt sind. Die Beugungselemente einer Teilmenge weisen die gleichen Gitterparameter (Spatialfrequenz, Profilform, Azimut usw.) auf und unterscheiden sich von den Beugungselementen der übrigen Teilmengen. Jedes Flächenteil unterscheidet sich von seinen beiden Nachbarn durch die Auswahl der Beugungselemente für die Teilflächen. Die Information dieser Informationsstreifen ist durch die Herstellung festgelegt und läßt sich nicht individuell für jeden Informationsstreifen verändern.

Aus der WO 00/62237 A2 ist ein Informationsstreifen mit in zwei Zeilen angeordneten gleich großen Rasterelementen bekannt, wobei sich die eine Beugungsstruktur der einen Zeile von der anderen Beugungsstruktur der anderen Zeile unterscheidet und die Gitterfurchen der feinen Reliefstrukturen der Beugungsstrukturen im wesentlichen parallel zu den Zeilen ausgerichtet sind. Jeweils ein Rasterelement aus der einen Zeile stellt mit dem benachbarten Rasterelement aus der anderen Zeile ein einzelnes Bit der Information dar. Bei diesem Informationsstreifen läßt sich nach der Herstellung eine Information einmal einschreiben, wobei bei dem Einschreiben in einem der beiden Rasterelemente eines Bits das optische Verhalten des Rasterelements irreversibel verändert wird.

Ein Lesegerät muß die Beugungsstrukturen in beiden Zeilen des Informationsstreifens simultan auslesen, wobei das Lesefeld möglichst exakt zur Trennlinie zwischen den beiden Beugungsstrukturen auszurichten ist. Die ertragbare Toleranz beträgt nicht mehr als ±0,5 mm. Inlays in Plastikkarten oder dergleichen weisen jedoch eine typische Toleranz von ±1 mm in Bezug auf die Kanten auf.

Die WO 03/027952 A beschreibt ein Etikett mit einem diffraktiven ersten Strichcode und einem zweiten Strichcode, der eine individualisierte Information bereitstellt. Weiter wird ein Lesegerät zum Auslesen der Informationen beschrieben. Der diffraktive erste Strichcode ist aus abwechselnd angeordneten Codeflächen und Zwischenflächen mit einer ersten und einer zweiten diffraktiven Reliefstruktur gebildet.

Die DE 199 24 750 A1 zeigt eine Leseanordnung für Informationsstreifen mit optisch kodierter Information. Der Informationsstreifen ist rechteckförmig und weist auf wenigstens zwei Zeilen eine Einteilung in gleich große Rasterelemente auf. Im unbeschriebenen Zustand weisen die Rasterelemente einer Zeile jeweils ein identisches optisches Verhalten auf. Zum Einschreiben einer Information wird eines der beiden benachbarten Rasterelemente so verändert, dass sein optisches Verhalten verändert ist.

Die EP-A1-0 718 795 beschreibt einen optischen Informationsträger mit wenigstens zwei parallelen Streifen, von denen jeder eine lichtbeugende Reliefstruktur aufweist, die sich in mindestens einem Parameter voneinander unterscheiden. Der Informationsträger wird durch Einwirkung von Energie, beispielsweise mittels Laserlicht, durch eine Schutzschicht hindurch beschrieben, wobei beispielsweise die lichtbeugende Reliefstruktur lokal zerstört wird oder die Schutzschicht optisch verändert wird.

Der Erfindung liegt nun die Aufgabe zugrunde, ein maschinenlesbares individualisierbares Sicherheitselement zu schaffen, das unempfindlich gegen Toleranzen ist und einen hohen Sicherheitsstandard aufweist, sowie Verfahren zur Herstellung des Sicherheitselements und zum Auslesen der in dem Sicherheitselement gespeicherten Information anzugeben.

Die Aufgabe der Erfindung wird mit einem Mehrschichtkörper gemäß Anspruch 1 gelöst.

Die Aufgabe wird weiter mit einem Verfahren zur Herstellung eines Mehrschichtkörpers mit einer optisch maschinell lesbaren Kennung gemäß Anspruch 16 gelöst.

Die Aufgabe wird weiter von einem Verfahren gemäβ Anspruch 24 zum Auslesen einer ersten und einer zweiten Information aus einem Mehrschichtkörper mit einer optisch maschinell lesbaren Kennung gelöst.

Der erfindungsgemäße Mehrschichtkörper zeichnet sich durch seine Unempfindlichkeit gegenüber Lagetoleranzen beim Aufbringen auf ein Trägersubstrat, wie beispielsweise eine Ausweiskarte, sowie eine hohe Sicherheit gegen Nachahmung und/oder Manipulation der abgespeicherten Information aus. Der Mehrschichtkörper weist ein optisch lesbares Hintergrundmuster auf, das die erste Information codiert, die beispielsweise ein Sicherheitsmerkmal und/oder Herkunftsmerkmal und/oder Klassifikationsmerkmal bilden kann. Die individualisierte zweite Information ist auf dem Hintergrundmuster angeordnet, wobei die zweite Information durch Bereiche repräsentiert ist, in denen das Hintergrundmuster verändert ist. Dadurch wird die Nachahmung des individualisierten Codemusters sehr erschwert, weil zugleich auch das Hintergrundmuster nachgeahmt werden muß und darüber hinaus die Anordnung des individualisierten Codemusters auf dem Hintergrundmuster nachgeahmt werden muß.

Das Einbringen des Hintergrundmusters kann bei der Herstellung des Mehrschichtkörpers erfolgen. Es ist so ausgebildet, daß es keinen zusätzlichen Fertigungsaufwand hervorruft und darüber hinaus keine zusätzlichen Vorrichtungen erfordert. Die mikroskopisch feinen Reliefstrukturen können durch bekannte Verfahren, wie das Heißprägen oder das Abformen in UVhärtbaren Lack, in den Mehrschichtkörper registergenau eingebracht werden. Es handelt sich dabei um kostengünstige Fertigungsverfahren, wenn große Stückzahlen hergestellt werden, was durch die fertigungsseitige Trennung der Herstellung des Hintergrundmusters und des individualisierten Codemusters ermöglich ist. So sind eine potentiell hohe Sicherheit und ein sehr kostengünstig individalisierbarer Code gegeben. Dies steht im Gegensatz zu bekannten Hochsicherheits-Systemen, die typischerweise sehr kostenaufwändig und schwierig für eine Massenfertigung sind. Bei dem Mehrschichtkörper kann es sich auch um einen Folienkörper handeln, in den weitere Sicherheitsmerkmale und/oder dekorative Elemente abgeformt sind, die auf diese Weise im Register mit den vorgenannten Reliefstrukturen sind.

Die optische Wirkung der mikroskopisch feinen Reliefstruktur kann durch Änderung der Reliefstruktur selbst (zum Beispiel durch Laser-Ablatton) oder durch Änderung der mit der Reliefstruktur optisch zusammenwirkenden Schichten, wie weiter unten beschrieben, oder der die Relifstruktur aufweisenden Schicht verändert werden (z.B. durch eine thermochrome Farbe in der Prägeschicht), oder die unterliegenden Schichten werden verändert (z.B. der Brechzahl angepaßt), d.h. Überziehen der Oberfläche mit einem transparenten Kunststoff vor dem Aufbringen einer metallischen oder dielektrischen Schicht, so daß das Gitter gewissermaßen gelöscht ist.

Das vorgeschlagene Verfahren zum Auslesen der in dem erfindungsgemäßen Mehrschichtkörper gespeicherten Informationen ermöglicht auf einfache Weise die parallele Ausgabe der ersten und der zweiten Information, indem vorgeschlagen wird, die erste Information aus der zweiten Information mathematisch zu rekonstruieren und dazu Zusatzinformationen aus der mathematischen Menge der vorgesehenen Hintergrundinformationen zu erhalten. Es kann also beispielsweise vorgesehen sein, daß die mathematische Menge der Hintergrundinformationen nicht alle mathematisch möglichen Kombinationen umfaßt. Eine solche Zusatzinformation stellt einen weiteren Sicherheitslevel dar, der durch bloße Nachahmung des Herstellungsprinzips des Mehrschichtkörpers nicht überwindbar ist.

Weitere vorteilhafte Ausgestaltungen sind in den Unteransprüchen bezeichnet.

Es kann vorgesehen sein, daß die Reliefstrukturen in den ersten und zweiten Bereichen mit einer optisch wirksamen Reflexionsschicht oder einer optischen Trennschicht ausgebildet sind. Bei der optisch wirksamen Reflexionsschicht kann es sich um eine reflektierende Schicht oder ein reflektierendes Schichtsystem handeln, die aus Metall, Halbleiter oder Dielektrikum ausgebildet sein können. Auch Flüssigkristall-Schichten können vorgesehen sein, insbesondere cholesterische Flüssigkristall-Schichten. Weiter können pigmentierte Lackschichten oder Lackschichten mit organischen Farben vorgesehen sein. Es kann sich bei der Reflexion auch um Totalreflexion handeln, die an der Grenzschicht zwischen zwei Schichten mit unterschiedlichen optischen Brechzahlen zu beobachten ist, oder die Beschichtungssysteme sind nur durch (Polarisations-)Filter sichtbar.

Weiter kann vorgesehen sein, daß die optisch wirksame Reflexionsschicht oder die optische Trennschicht von einer Schutzschicht bedeckt ist, die einen thermochromen Farbstoff aufweist. Der thermochrome Farbstoff kann durch thermische Einwirkung dauerhaft seine Farbe ändern, wobei der Farbwechsel mit einem Wechsel der Transparenz der Schutzschicht einhergehen kann.

Vorteilhafterweise kann vorgesehen sein, daß in einem Bereich, der ein Bit des individualisierten Codemusters mit dem Wert "1" repräsentiert, die Reflexionsschicht oder die optische Trennschicht entfernt oder optisch verändert ist oder von einer opaken Schicht überdeckt ist oder die Reliefstruktur verändert ist. Es kann auch vorgesehen sein, daß die Schicht unter der Reliefstruktur verändert ist, z.B. durch Aufbringen einer brechzahlangepaßten Schicht vor dem Aufbringen der metallischen oder dielektrischen Schicht oder durch Veränderung der Kleberschicht.

Alternativ kann vorgesehen sein, daß in einem Bereich, der ein Bit des individualisierten Codemusters mit dem Wert "0" repräsentiert, die Reflexionsschicht oder die optische Trennschicht entfernt oder verändert ist oder von einer opaken Schicht überdeckt ist oder die Reliefstruktur verändert ist. Auf diese Weise kann der Mehrschichtkörper besonders gut den Einsatzbedingungen bzw. dem Verwendungszweck angepaßt werden. Bei Codes, die eine Vielzahl von aufeinanderfolgenden gleichen Bits aufweisen, ist das Hintergrundmuster auch durch ein unbewaffnetes Auge erkennbar Weil das Hintergrundmuster nun entweder in "0"-Bereichen oder in "1" -Bereichen erkennbar sein kann, kann das individualisierte Codemuster immer so ausgeführt werden, daß das Hintergrundmuster gut erkennbar ist.

Das Einbringen des individualisierten Codemusters kann an verschiedenen Orten vorgesehen sein. Seriennummern können beispielsweise beim Hersteller eingebracht werden oder bei einer zentralen Stelle, beispielsweise bei einer zentralen Paßausgabestelle. Das individualisierte Codemuster kann aber auch an dezentralen Ausgabestellen eingebracht werden, beispielsweise in Botschaften. Bei dem individualisierten Codemuster kann es sich auch um ein zusammengesetztes Codemuster handeln, das beispielsweise eine Produktionsnummer, die bei der Herstellung eingebracht wird, einen Landescode oder einen Jahrescode, der bei der zentralen Paßausgabestelle eingebracht wird sowie eine Paßnummer, die bei der dezentralen Ausgabestelle eingebracht wird, umfaßt. Dabei kann der Eindruck erweckt sein, daß das individualisierte Codemuster in einem Arbeitsschritt eingebracht wurde.

Weiter kann vorgesehen sein, daß einem ersten und/oder zweiten Bereich des eine erste Information kodierenden Hintergrundmusters eine Vielzahl von dritten Bereichen des eine individualisierte zweite Information kodierenden individualisierten Codemusters zugeordnet ist. Auch diese Maßnahme trägt dazu bei, daß das Hintergrundmuster auch nach dem Aufbringen des individualisierten Codemusters erkennbar und auswertbar ist. Es ist auch möglich, daß die Daten durch mehr als zwei Zustände dargestellt werden. Der Reflexionsgrad oder der Transmissionsgrad einer Schicht kann beispielsweise fünf Werte (0%, 25%, 50%, 75% und 100%) darstellen und/oder die Polarisation gebeugten Lichtes kann eine von vier unterschiedlichen Richtungen aufweisen (0°, 33°, 66,6° und 90°) und/oder die relativen Stärken der verschiedenen spektralen Regionen des gebeugten Lichtes, gemessen zum Beispiel mit einem farbempfindlichen CCD-Sensor, können eine Information darstellen. Dies ermöglicht eine höhere Informationsdichte, denn anstatt der beiden Binärwerte 0 und 1 können so beispielsweise hexadezimale Werte dargestellt werden.

Weitere vorteilhafte Ausgestaltungen sind auf die Art des individualisierten Codemusters gerichtet.

Es kann vorgesehen sein, daß es sich bei dem individualisierten Codemuster um einen eindimensionalen Barcode handelt. Barcodes sind insbesondere zur Kennzeichnung von Waren weit verbreitet. Sie erzeugen bei dem Betrachter den Eindruck, daß der Code in einer Abfolge unterschiedlich breiter Balken abgelegt ist.

Weiter kann vorgesehen sein, daß es sich bei dem individualisierten Codemuster um einen zweidimensionalen Barcode handelt. Auch bei dem zweidimensionalen Barcode handelt es sich um einen häufig verwendeten Code.

Weil es sich bei den individualisierten Codemustern um bekannte Codemuster handelt, wird der Hintergrundcode zunächst als ein optisches Gestaltungsmittel wahrgenommen und ist damit der breiten öffentlichen Wahrnehmung entzogen.

Weitere vorteilhafte Ausgestaltungen sind auf die Ausbildung der Reliefstrukturen gerichtet.

Es kann vorgesehen sein, daß die erste und die zweite Reliefstruktur asymmetrische Reliefstrukturen sind. Bei den asymmetrischen Reliefstrukturen handelt es sich um periodische Strukturen mit zwei Flanken unterschiedlicher Steilheit bzw. Neigung. Einfallendes Licht wird deshalb bevorzugt in eine Richtung abgelenkt. Wenn die Periodenlänge der Reliefstruktur in der Größenordnung der Wellenlänge bzw. der mittleren Wellenlänge ist, wird das Licht an der Reliefstruktur gebeugt. Es kann sich beispielsweise um ein Blazegitter handeln, das durch den Gitterlinienabstand und den Blazewinkel, unter dem die Gitterelemente geneigt sind, charakterisiert ist. Blazegitter lenken möglichst viel Licht in eine bestimmte Beugungsordnung und erzeugen daher besonders helle Beugungsbilder.

Es kann vorgesehen sein, daß die erste und die zweite Reliefstruktur einen unterschiedlichen k-Vektor aufweist.

Vorteilhafterweise kann vorgesehen sein, daß sich die Richtung des k-Vektors der ersten Reliefstruktur von der Richtung des k-Vektors der zweiten Reliefstruktur um 180° unterscheidet. Dabei kann vorgesehen sein, daß der Betrag des k-Vektors gleich ist, d.h. es sich um zwei identische Reliefstrukturen handelt, die um 180° gegeneinander gedreht sind.

Es kann auch vorgesehen sein, daß die erste und die zweite Reliefstruktur eine unterschiedliche Gitterperiode aufweisen.

Weiter kann vorgesehen sein, daß die erste und die zweite Reliefstruktur eine unterschiedliche Gitterform aufweisen. Vorteilhafterweise kann es sich um Reliefstrukturen handeln, die mit einer anisotropen Mattstruktur kombiniert sind. Es kann sich beispielsweise bei der ersten Reliefstruktur um die Mattstruktur handeln, die mit einem Polarisationsgitter für 0° kombiniert ist und bei der zweiten Reliefstruktur um die Mattstruktur handeln, die mit einem Polarisationsgitter für 90° kombiniert ist.

Es kann auch vorgesehen sein, daß die erste und die zweite Reliefstruktur eine unterschiedliche Gittertiefe aufweisen.

Mit den vorstehend beschriebenen Ausführungen können die erste und die zweite Reliefstruktur so ausgebildet werden, daß sie deutlich unterscheidbare optische Effekte ausbilden, insbesondere bei schräg einfallendem Licht. Es kann sich dabei sowohl um Änderungen der Helligkeit bzw. Intensität des von der Reliefstruktur abgelenkten Lichtes handeln als auch um Farbeffekte, wenn die Reliefstruktur mit polychromatischem Licht beleuchtet wird, beispielsweise mit Tageslicht.

Weiter kann vorgesehen sein, daß die erste und die zweite Reliefstruktur einen durch Streuung und/oder Reflexion hervorgerufenen unterschiedlichen Polarisationseffekt aufweisen. Polarisiertes Licht kann mittels Anordnungen von einem oder mehreren Polarisationsfiltern beeinflußt und/oder nachgewiesen werden. Es kann also vorgesehen sein, daß von der einen Reliefstruktur polarisiertes Licht die Anordnung ungehindert durchdringt und von der anderen Reliefstruktur polarisiertes Licht abgeschwächt wird. Es kann auch vorgesehen sein, daß die Reliefstrukturen mit polarisiertem Licht beleuchtet werden und dabei beispielsweise die Polarisationsebene drehen. Zur Auswertung kann die vorstehend genannte Anordnung aus einem oder mehreren Polarisationsfiltern vorgesehen sein.

In einer weiteren vorteilhaften Ausgestaltung ist vorgesehen, daß die erste und die zweite Reliefstruktur als Hologramm oder KINEGRAM^{®} ausgebildet sind. Diese Ausführung kann bevorzugt sein, um das individualisierte Codemuster in ein Schmuckelement einzubetten oder um das Hintergrundmuster besonders fälschungssicher auszubilden. Weiter vorteilhaft kann sein, daß jeder Abschnitt des Hologramms oder KINEGRAM^{®} nahezu die Gesamtinformation wiedergibt.

Es kann auch vorgesehen sein, daß die ersten und zweiten Bereiche ein graphisches Muster bilden oder Teil eines graphischen Musters sind.

Weitere Ausgestaltungen sind auf das Verfahren zum Einschreiben des individualisierten Codemusters in den Mehrschichtkörper gerichtet.

Es kann vorgesehen sein, daß das individualisierte Codemuster durch thermische Einwirkung gebildet wird, wobei die Reflexionsschicht oder die optische Trennschicht entfernt oder in ihrer optischen Wirkung verändert wird oder die Reliefstruktur verändert wird oder ein thermochromer Farbstoff der Schutzschicht aktiviert wird.

Es kann auch vorgesehen sein, ein sogenanntes PCI (Polycarbonate Insert) mit einem individualisierten Codemuster zu versehen. Insbesondere kann das KINEGRAM^{®} für die PCI-Variante eine sehr filigrane Natur haben, mindestens in den Bereichen, die individualisiert werden, z.B. mit einer Photographie oder mit Daten, wie dem Namen und Verfallsdatum. In diesen Bereichen - nur 10% bis 50% des KINEGRAM^{®} sind optisch aktiv (d.h. sie weisen ein Gitter auf) - und in diesen aktiven Bereichen und nur in diesen aktiven Bereichen, befindet sich eine metallische Schicht für die diffraktiven Strukturen. Folglich ist das KINEGRAM^{®} vollständig lichtdurchlässig (d.h., das KINEGRAM^{®} ist völlig unsichtbar) in 50% bis 90% der Kartenfläche, und in diesem Bereich kann ein Laser leicht das Photo und die Daten personalisieren. Es kann folglich vorgesehen sein, daß die Personalisierung unter dem KINEGRAM® und seinem Foliensystem (einschließlich der Kleberschicht) stattfindet.

Es kann folgender Aufbau vorgesehen sein:
- Laser
- Luft
- Schutzschichten auf der PCl-Card
- KINEGRAM® mit Metall in 10 bis 50% der Oberfläche, z.B. als dünne Linie oder Punktmuster
- Kleberschicht
- Personalisierungsschicht, die durch den Laser schwärzbar ist.

In anderen Ausbildungen kann vorgesehen sein, daß das individualisierte Codemuster durch Aufdrucken einer opaken Schicht gebildet wird.

Es kann auch vorgesehen sein, daß das individualisierte Codemuster dadurch gebildet wird, daß in den nicht dem individualisierten Codemuster zugeordneten Bereichen der optisch maschinell lesbaren Kennung die Reflexionsschicht durch thermische Einwirkung entfernt oder in ihrer optischen Wirkung verändert wird oder die Reliefstruktur verändert wird oder ein thermochromer Farbstoff der Schutzschicht aktiviert wird oder die transparente Schutzschicht in eine opake Schutzschicht überführt wird. Bei der transparenten Schutzschicht kann es sich beispielsweise um eine laser-sensitive Polycarbonat-Schutzschicht handeln, die über einer metallisierten oder mit HRI versehenen diffraktiven Schicht angeordnet ist. Zur Durchführung dieses Verfahrensschritts können Laser verwendet werden, wobei durch Wahl der Laserart und Einstellung der Laserparameter dauerhafte Veränderungen in einer Schicht vorgenommen werden können, die durch eine oder mehrere Schichten überdeckt ist. Das individualisierte Codemuster ist deshalb gegen Beschädigung und gegen Verfälschung gut geschützt.

Es kann vorgesehen sein, daß auf nicht dem individualisierten Codemuster zugeordnete Bereiche der optisch maschinell lesbaren Kennung eine opake Schicht aufgedruckt wird. Ein solcher Aufdruck kann beispielsweise für Randbereiche des Mehrschichtkörpers vorgesehen sein. Es können auch Markierungen aufgedrucktwerden, an denen ein Lesegerät ausrichtbar ist.

Weiter kann vorgesehen sein, daß das individualisierte Codemuster eine Information bereitstellt, die aus einer individualisierten Information und aus einem aus der individualisierten Information berechneten Prüfcode gebildet ist. Der Prüfcode kann zum einen dazu dienen, Lesefehler zu erkennen und gegebenenfalls zu korrigieren. Er kann aber auch vorgesehen sein, um nachträgliche Änderungen des individualisierten Codemusters festzustellen.

Weiter kann vorgesehen sein, daß das individualisierte Codemuster mit einem Start- und/oder Stop-Abschnitt versehen wird. Der Start- und/oder Stop-Abschnitt kann für alle individualisierten Codemuster gleich ausgeführt sein, um beispielsweise Korrekturdaten für ein Lesegerät bereitzustellen. Es kann auch vorgesehen sein, eine Abgrenzungs-Sequenz zu Synchronisationszwecken in das Codemuster einzubringen.

In einer weiteren vorteilhaften Ausgestaltung ist vorgesehen, daß die erste Information zur Charakterisierung eines Sicherheitsdokuments verwendet wird. Es kann vorgesehen sein, daß die erste Information die Art und/oder den Verwendungszweck und/oder die Herkunft des Sicherheitsdokuments umfaßt. Weitere Ausgestaltungen sind auf das Verfahren zum Auslesen der Informationen gerichtet.

Es kann vorgesehen sein, daß der Mehrschichtkörper von einer Lichtquelle beleuchtet wird, und daß das erste und das zweite Signalmuster mit zwei beidseitig des Mehrschichtkörpers angeordneten Sensorzeilen oder Sensorarrays bestimmt werden. Es kann sich beispielsweise um eine Lichtquelle handeln, die zentral über dem Mehrschichtkörper angeordnet ist und deren Strahlen durch die Reliefstrukturen des Mehrschichtkörpers so abgelenkt wird, daß es in Richtung auf die beidseitig des Mehrschichtkörpers angeordneten Sensorzeilen oder Sensorarrays abgelenkt wird. Vorzugsweise kann vorgesehen sein, daß jedem Abschnitt des Mehrschichtkörpers, der ein Bit verkörpert, mehr als ein Sensorpixel zugeordnet ist. Auf diese Weise kann beispielsweise durch Mittelwertbildung ein verläßliches Sensorsignal erzeugt werden. Es können beispielsweise 8 Sensorpixel pro Bit vorgesehen sein.

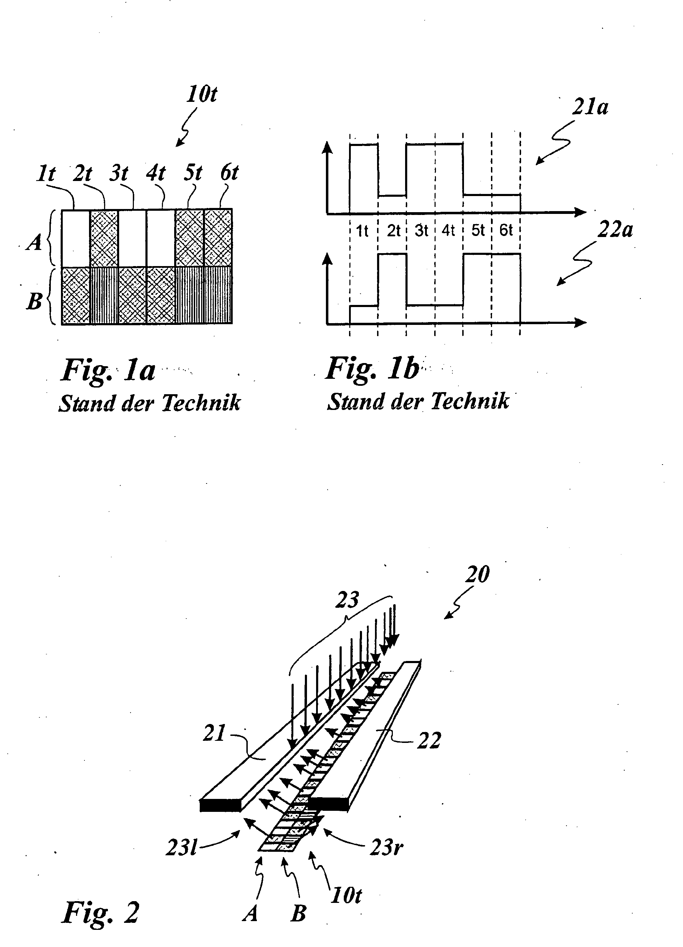

Alternativ kann vorgesehen sein, daß der Mehrschichtkörper von zwei beidseitig des Mehrschichtkörpers angeordneten Lichtquellen beleuchtet wird, und daß das erste und das zweite Signalmuster mit einer über dem Mehrschichtkörper angeordneten Sensorzeile oder einem Sensorarray bestimmt werden, wobei die beiden Lichtquellen alternierend in Betrieb gesetzt werden. In einer vorteilhaften Ausbildung kann vorgesehen sein, daß die eine Lichtquelle rotes Licht ausstrahlt und die andere Lichtquelle blaues Licht ausstrahlt, wobei das erste Signalmuster beispielsweise in die -1. Ordnung beugt und das zweite Signalmuster in die +1. Ordnung beugt und beide Lichtquellen die beiden Signalmuster gleichzeitig beleuchten. Eine einzige Messung ergibt sowohl die +1-Information als auch die -1-Information. Die -1-Information ist in dem Rot-Kanal des Bildes enthalten, während die +1-Information in dem Blau-Kanal enthalten ist. Folglich enthält ein Bild (z.B. JPEG) die -1-Information und die +1-Information gleichzeitig. Es können auch zwei Polarisationszustände mit einem Bild gemessen werden (Rot kann die S-Polarisations-Information enthalten, während Blau die P-Polarisations-Information enthalten kann). Im folgenden wird die Erfindung anhand von mehreren Ausführungsbeispielen unter Zuhilfenahme der beiliegenden Zeichnungen beispielhaft verdeutlicht. Es zeigen
- Fig. 1a: eine Informationsspur eines streifenförmigen Sicherheitselements nach dem Stand der Technik;
- Fig. 1 b: Diagramme der von einem Lesegerät erzeugten Ausgangssignale anhand der Informationsspur in Fig. 1 a;
- Fig. 2: eine Prinzipdarstellung eines Lesegerätes;
- Fig. 3a: eine unbeschriebene Informationsspur eines ersten Ausführungsbeispiels eines erfindungsgemäßen Sicherheitselements;
- Fig. 3b: Diagramme der von dem Lesegerät in Fig. 2 erzeugten Ausgangssignale der Informationsspur in Fig. 3a;
- Fig. 4a: eine individualisierte Informationsspur in Fig. 3a;
- Fig. 4b: Diagramme der von dem Lesegerät in Fig. 2 erzeugten Ausgangssignale der individualisierten Informationsspur in Fig. 4a;
- Fig. 5a: eine unbeschriebene Informationsspur eines zweiten Ausführungsbeispiels eines erfindungsgemäßen Sicherheitselements;
- Fig. 5b: eine individualisierte Informationsspur in Fig. 5a;
- Fig. 6a: eine unbeschriebene zweidimensionale Informationsspur eines dritten Ausführungsbeispiels eines erfindungsgemäßen Sicherheitselements;
- Fig. 6b: eine individualisierte Informationsspur in Fig. 6a;
- Fig. 7a: ein Lesegerät zum Auslesen der Informationsspur in Fig. 6b mit Beleuchtung von rechts;
- Fig. 7b: die wie in Fig. 7a beleuchtete Informationsspur in Fig. 6b in der Draufsicht;
- Fig. 8a: das Lesegerät in Fig. 7a mit Beleuchtung von links;
- Fig. 8b: die wie in Fig. 8a beleuchtete Informationsspur in Fig. 6b in der Draufsicht;
- Fig. 9a: ein photographisches Abbild eines erfindungsgemäßen Sicherheitselements in der Vorderansicht;
- Fig. 9b: ein photographisches Abbild eines erfindungsgemäßen Sicherheitselements in der Rückansicht;
- Fig. 10a, b: Ausführungsbeispiele für holographische Hintergrundmuster.

Die Fig. 1a zeigt eine Informationsspur 10t eines Sicherheitselements nach dem Stand der Technik. Wie in Fig. 1a zu erkennen, ist die Informationsspur 11t in gleichmäßig große Bitabschnitte 1t bis 6t unterteilt, die jeweils 1 Bit eines Binärcodes repräsentierten. Jeder Bitabschnitt 1t bis 6t ist weiter in zwei gleich große benachbarte Bereiche A und B unterteilt, die zwei benachbarte Reihen in Erstreckungsrichtung der Informationsspur 10t bilden. Die Oberflächen der Bereiche A und B sind mit unterschiedlicher asymmetrischer Reliefstruktur ausgebildet. Es handelt sich dabei um nicht-holografische asymmetrische diffraktive Reliefstrukturen A und B, welche auftreffendes Licht in eine spezifische von Null verschiedene Ordnung ablenken, die sich in ihrem k-Vektor voneinander unterscheiden. Die Richtung des k-Vektors der Reliefstruktur A kann beispielsweise 0° sein und die Richtung des k-Vektors der Reliefstruktur B kann beispielsweise 180° sein. Der Betrag der beiden k-Vektoren kann gleich sein. Dabei kann die Reliefstruktur A den Binärwert "0" und die Reliefstruktur B den Binärwert "1" repräsentieren. Die Reliefstrukturen A und B sind mit einer Reflexionsschicht versehen, beispielsweise mit einer metallischen Schicht.

Zum Einschreiben einer Information in die Informationsspur 10t wird entweder die Reliefstruktur A oder die Reliefstruktur B der Bitabschnitte 1t bis 6t entfernt, beispielsweise durch Laser-Ablation, oder mit einer nicht oder schlecht reflektierenden Schicht überdeckt, beispielsweise durch Aufdrucken einer Farbschicht. In dem Fall, daß das Sicherheitselement als Einlage ausgebildet ist, kann die Information auch durch Schwärzen ausgewählter Bereiche einer transparenten Deckschicht eingeschrieben werden, zum Beispiel mit einem Laser. Zum Einschreiben einer "0" in einen Bitabschnitt wird deshalb die Reliefstruktur B des Bitabschnitts entfernt oder abgedeckt. Das Einschreiben der Information wird typischerweise nach dem Aufbringen des OVD auf ein Substrat durchgeführt. Im einzelnen kann Laser-Ablation
- das Metall verdampfen unter Zurücklassen eines transparenten Bereiches,
- das Metall und das Foliensystem verdampfen oder
- das Metall und das Foliensystem verdampfen und das Substrat deformieren
- ähnlich wie bei der Swiss ID-Card, oder
- das OVD , das Foliensystem und das Substrat verdampfen - ähnlich wie beim sogenannten NPLC-Projekt, bei dem ein Loch in das KINEGRAM^{®} und das Papiersubstrat gleichzeitig eingebracht ist.

Zum Auslesen der in der Informationsspur gespeicherten Information kann ein Lesegerät 20 vorgesehen sein, wie in Fig. 2 dargestellt. Das Lesegerät 20 weist Detektorarrays 21, 22 auf, die voneinander beabstandet über der Informationsspur 10t des Sicherheitselements angeordnet sind. Die Länge der Detektorarrays 21, 22 ist durch die Länge der Informationsspur 10t bestimmt. Bei dem Detektorarray kann sich beispielsweise um einen CCD-Zeilensensor handeln. Die Informationsspur 10t wird von Strahlen 23 einer über der informationsspur angeordneten Lichtquelle beleuchtet.

Die Strahlen 23 werden durch Beugung an den Bereichen A, B der Informationsspur 10t so abgelenkt, daß sie auf das dem Bereich benachbarte Detektorarray fallen. In dem in Fig. 2 dargestellten Beispiel sind die Bereiche A dem Detektorarray 21 und die Bereiche B dem Detektorarray 22 benachbart. Die beiden Detektorarrays 21, 22 erfassen das auf sie abgelenkte Licht simultan, wobei dafür gesorgt sein muß, daß die Trennlinie zwischen den Bereichen A und B der Informationsspur 10t mit der Mittellinie des Meßfeldes der beiden Detektorarrays 21, 22 zusammenfällt. Die ertragbare Toleranz der Überdeckung beträgt ± 0,5 mm. Diese enge Toleranz, die daraus folgt, Lichtquelle und Detektorarray erforderlichenfalls austauschen zu können, ist im praktischen Einsatz häufig nicht einzuhalten. Plastikkarten haben beispielsweise eine Toleranz von ± 1 mm, wobei auch Schieflagen der Informationsspur möglich sind.

Die Fig. 1b zeigt Diagramme der Ausgangssignale 21 a und 22a der Detektorarrays 21 und 22 für einen idealen Lesevorgang, d.h. für eine toleranzfreie Lage der Informationsspur 10t zu den beiden Detektorarrays. Die Abszisse des Diagramms bezeichnet die Zuordnung des Ausgangssignals zum Bitabschnitt, die Ordinate den Signalpegel des Bitabschnitts. In dieser schematischen Darstellung ist nicht berücksichtigt, daß pro Bitabschnitt n Einzelsensoren auf dem Detektorarray vorgesehen sein können, die jeder für sich ein individuelles Ausgangssignal bilden können, das innerhalb eines Toleranzfeldes um den Idealwert variiert.

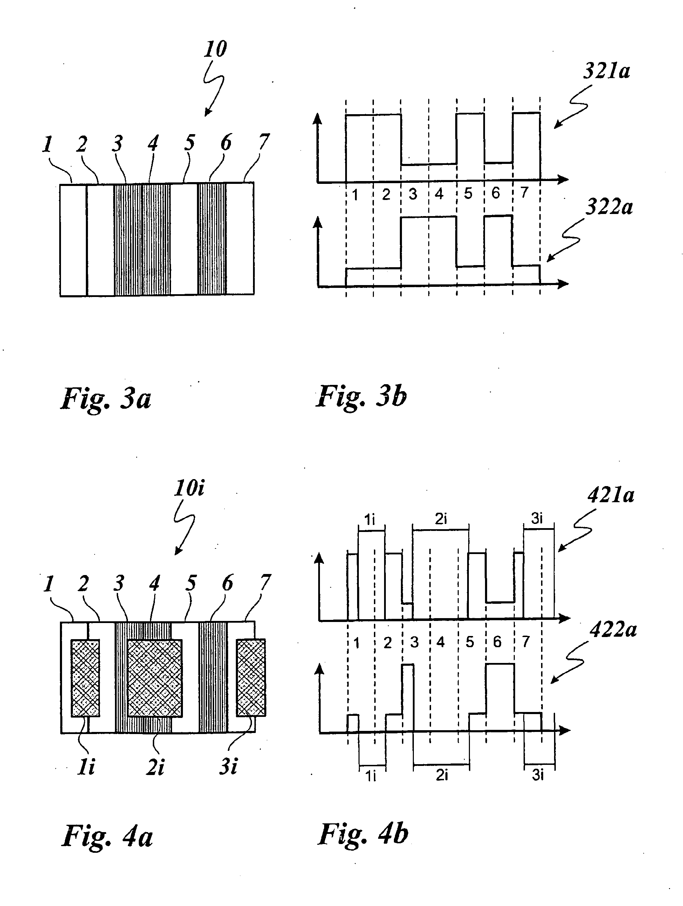

Die Fig. 3a und 4a zeigen nun ein erstes Ausführungsbeispiel eines erfindungsgemäßen Sicherheitselements mit einer Informationsspur 10.

Die Informationsspur 10 ist während der Herstellung mit einem Binärcode versehen, bei dem es sich um streifenförmige Bitabschnitte 1 bis 7 handelt, deren Oberfläche entweder eine Reliefstruktur vom Typ A oder eine Reliefstruktur vom Typ B aufweisen kann, wie weiter oben erläutert. In dem in Fig. 3a dargestellten Beispiel weist die Informationsspur 10 sieben Bitabschnitte auf, die entsprechend der weiter oben beschriebenen Zuordnung den Binärcode "0011010" darstellen. Der Binärcode kann vorgesehen sein zur Abspeicherung des Verwendungs- und/oder Einsatzzwecks des mit dem Sicherheitselement versehenen Sicherheitsdokuments. Beispielsweise kann die Informationsspur für eine in Frankreich verwendete ID-Card oder einen Reisepaß den Code "01011100" aufweisen und für eine in Deutschland verwendete ID-Card oder einen Reisepaß den Code "10100001" aufweisen.

Fig. 3b zeigt analog zu Fig. 1b Diagramme der Ausgangssignale 321 a und 322a des in Fig. 2 beschriebenen Lesegeräts 20. Weil die in Erstreckungsrichtung der Informationsspur 10 hintereinander angeordneten Bitabschnitte 1 bis 7 entweder die Reliefstruktur A oder die Reliefstruktur B aufweisen, ist das Ausgangssignal prinzipiell wie das in Fig. 1b dargestellte Ausgangssignal ausgebildet. Trotz dieser prinzipiellen Übereinstimmung ist jedoch die Fehlertoleranz bedeutend größer, denn die Informationsspur ist nicht wie die Informationsspur in Fig. 1 a nach dem Stand der Technik mit einer Mittellinie ausgebildet. Das Ausgangssignal 322a des Detektorarrays 22 kann durch Negation des Ausgangssignals 321 a des Detektorarrays 21 dargestellt werden und umgekehrt. Lesefehler sind deshalb durch eine einfache Kontrollrechnung feststellbar und korrigierbar.

Die Informationsspur 10 kann vor Auslieferung des Sicherheitsdokuments individualisiert werden. Fig. 4a zeigt eine individualisierte Informationsspur 10i, bei der Bitabschnitte 1i bis 3i durch Abtragung oder Überdeckung der Reflexionsschicht auf den Bitabschnitten 1 bis 7 erzeugt worden sind.

Wie in Fig. 4b zu erkennen, sind auch die Ausgangssignale 421a und 422a der Detektorarrays 21 und 22 in hohem Maße fehlertolerant. Die individulisierte Information, repräsentiert durch die Bitabschnitte 1i bis 3i, senkt in beiden Detektorarrays das Ausgangssignal in gleichem Maße ab. In dem in Fig. 4b dargestellten Ausführungsbeispiel ist das Ausgangssignal der Bitabschnitte 1 i bis 3i gleich Null, der Low-Wert des Ausgangssignals der Bitabschnitte 1 bis 7 ist von Null verschieden und kleiner als der High-Wert des Ausgangssignals der Bitabschnitte 1 bis 7. Es ist vorgesehen, daß der Low-Wert des Ausgangssignals auch dann größer als das Ausgangssignal der Bitabschnitte 1 i bis 3i ist, wenn dieses von Null verschieden ist. Auf diese Weise können Meßfehler, die beispielsweise durch Lageabweichungen der Detektorarrays 21, 22 oder durch Verschmutzung oder Beschädigung des Informationsstreifens 10i auftreten können, eliminiert werden. Es kann auch vorgesehen sein, vor den Detektorarrays 21, 22 optische Elemente, wie beispielsweise Zylinderlinsen, anzuordnen, um das von dem Informationsstreifen 10i reflektierte Licht auf die Detektorarrays 21, 22 zu konzentrieren.

Die Asymmetrie der Blazegitter, welche die Informationsspur 10i bilden, durch Heißprägen erzeugt, hat ein Verhältnis von 5:1 bis 20:1. Bei diesen Werten kann der individualisierte Informationscode sehr leicht vom Hintergrundcode getrennt werden. Für hohe Werte der Asymmetrie, die beispielsweise realisiert werden können mit asymmetrischen achromatischen Gittern oder hoch polarisierten Codes, ist es schwieriger, den individualisierten Informationscode vom Hintergrundcode zu trennen. In diesem Fall kann vorteilhafterweise vorgesehen sein, die Summe und die Differenz der beiden Codes (-1-Code und +1-Code) zu bestimmen und die individualisierte Information aus diesen beiden Messungen zu berechnen.

Die Breite des Informationsstreifens 10i ist bestimmt durch das Meßfeld der Detektorarrays 21, 22 und die maximale Lagetoleranz, für welche der Informationsstreifens ausgelegt ist. Die Breite des Informationsstreifens soll in der Größenordnung der Breite des Meßfeldes oder kleiner sein und/oder sie soll größer sein als die maximale Lagetoleranz. Die Lagetoleranz, die beim Applizieren von Sicherheitselementen auf als Plastikkarten ausgebildeten Sicherheitsdokumenten im allgemeinen ±1 mm beträgt, führt zu keiner Beeinträchtigung beim Auslesen der Information aus dem Informationsstreifen 10i. Das ist, wie bereits weiter oben beschrieben, darauf zurückzuführen, daß die Meßzone des Detektorarrays irgendwo in Höhe des Informationsstreifens liegen kann. Bei einem Informationsstreifen nach dem Stand der Technik muß das Meßfeld entlang oder dicht bei der Mittellinie der beiden Bereiche mit den Reliefstrukturen A und B liegen.

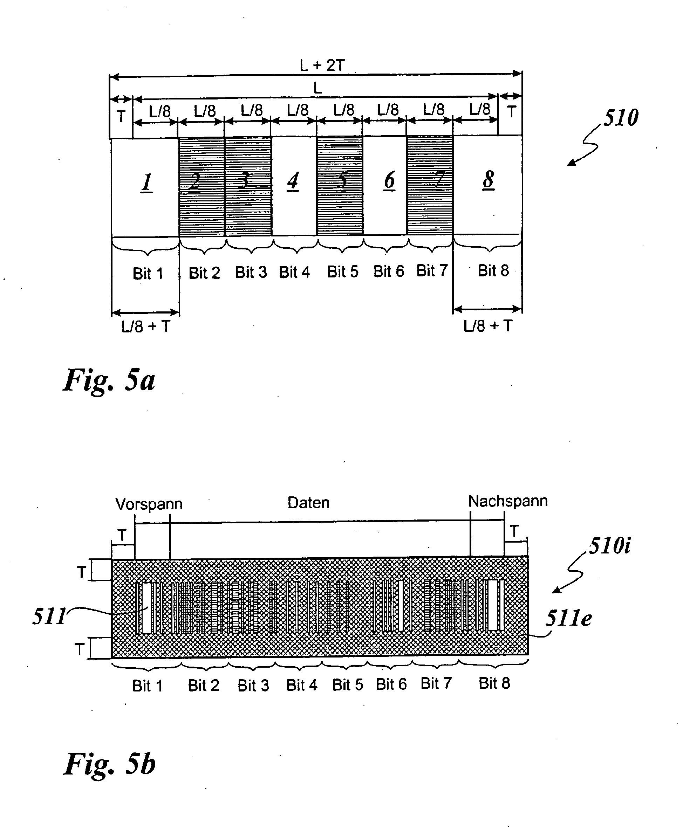

Die Fig. 5a und 5b zeigen nun ein zweites Ausführungsbeispiel eines erfindungsgemäßen Sicherheitselements.

Fig. 5a zeigt eine Informationsspur 510, die bei der Herstellung in das Sicherheitselement eingebracht ist. Die Informationsspur 510 kann in ein übergeordnetes Sicherheitselement integriert sein, zum Beispiel in ein KINEGRAM^{®}, so daß sie optisch nicht auffällig ist. Die Informationsspur 510 ist während der Herstellung mit einem Binärcode versehen, bei dem es sich um streifenförmige Bitabschnitte 1 bis 8 handelt, deren Oberfläche entweder eine Reliefstruktur vom Typ A oder eine Reliefstruktur vom Typ B aufweisen kann, wie weiter oben erläutert. Die Bitabschnitte stellen entsprechend der weiter oben beschriebenen Zuordnung den Binärcode "01101010" dar. Die Informationsspur 510 weist in Richtung ihrer Längserstreckung Randabschnitte mit einer Länge T auf. Die Länge des für die Darstellung des Binärcodes vorgesehenen inneren Abschnitts der Informationsspur 510 ist mit L bezeichnet. Ein streifenförmiger Bitabschnitt 1 bis 8 hat also eine Länge U8. Die beiden Randabschnitte sind Teilabschnitte der äußeren Bitabschnitte 1 und 8, die deshalb eine Länge (U8 + T) haben.

Fig. 5b zeigt nun eine individualisierten Informationsspur 510i, die aus der Informationsspur 510 in Fig. 5a durch Aufbringen eines Barcodes 511 gebildet ist. Der Barcode 511 ist in dem in Fig. 5b dargestellten Ausführungsbeispiel durch Laserablation erzeugt. Es handelt sich dabei um einen 160 Bit-Code, bei dem ein "1"-Bit durch einen Bereich mit entfernter Reflexionsschicht gekennzeichnet ist. Der Barcode 511 ist allseitig von einem Randstreifen mit der Breite T umgeben, in dem ebenfalls die Reflexionsschicht entfernt ist. Die durch Laserbestrahlung abgetragenen Bereiche 511e sind in der Fig. 5b mit einer Kreuzschraffur hinterlegt dargestellt. Diese Ausbildung ist insbesondere vorteilhaft zur Erhöhung der Sicherheit gegen nachträgliche Manipulation, denn in die abgetragenen Bereiche kann kein zusätzlicher Code eingeschrieben werden.

Wie in Fig. 5b zu erkennen, weisen die Oberflächen der Balken des Barcodes 511, die ein "0"-Bit repräsentieren, entweder eine Reliefstruktur A oder eine Reliefstruktur B auf, wobei die Anordnung der Reliefstrukturen A, B der Anordnung entspricht, die bei der Herstellung der Informationsspur 510 eingebracht ist (Fig. 5a).

Der Barcode 511 ist mit einem Vorspann und einem Nachspann versehen, so daß der Datenabschnitt auf dem Barcode leicht identifizierbar ist. Der Vorspann und/oder der Nachspann vereinfachen außerdem die Fehlerkorrektur, wenn vorgesehen ist, daß Vor- und Nachspann für jeden individuellen Barcode identisch sind. Es kann aber auch vorgesehen sein, auf den Vorspann und auf den Nachspann zu verzichten, ohne die Funktion der Informationsspur bzw. die Auslesbarkeit des Barcodes 511 in Frage zu stellen. Zur hohen Fehlertoleranz der informationsspur 510i wird auf die Ausführungen zu Fig. 4a verwiesen.

Die in Fig. 5b dargestellte Informationsspur 510i weist außerdem eine hohe Fälschungssicherheit auf, weil eine Kopie des Barcodes 511 allein nicht das Ausgangssignal eines unverfälschten Barcodes hervorruft.

In dem in Fig. 5a und 5b dargestellten Ausführungsbeispiel ist die Informationsspur 510i 20 mm lang und 4 mm breit. Die Breite der Randabschnitte T beträgt 1 mm. Die für den Barcode nutzbare Länge L ist also 18 mm. Falls für den Code 200 Bit vorgesehen sind und für den Vorspann und den Nachspann jeweils 8 Bit, so sind für ein Bit 18/216 mm = 83 µm vorgesehen. Unter der Annahme, daß ein Sensorpixel eines Lesegerätes eine Breite von 8 µm hat und ein Abbildungsmaßstab 1:1 gewählt ist, wird ein Bit von acht Sensorpixeln abgebildet. Damit ist ein guter Signalabstand verwirklicht.

Die als Hintergrundspur verwendete Informationsspur ist mit 8 Bit codiert, d.h. jedes Bit hat eine Breite von 2,25 mm und auf jedes Hintergrund-Bit entfallen 27 Daten-Bits. Es ist für den vorgesehenen Zweck wichtig, daß mehrere Daten-Bits auf ein Hintergrund-Bit entfallen, um die Informationsspur 510 sicher auslesen zu können. Zum Auslesen sind insbesondere Abschnitte der Informationsspur 510i geeignet, in denen mehrere "0"-Bits aufeinander folgen.

Es kann jedoch auch vorgesehen sein, daß das "0"-Bit durch Abtragen der Reflexionsschicht erzeugt wird und das "1"-Bit entweder die Reliefstruktur A oder die Reliefstruktur B aufweist. In diesem Falle sind zum Auslesen der Informationsspur 510 insbesondere Abschnitte der Informationsspur 510i geeignet, in denen mehrere "1"-Bits aufeinander folgen.

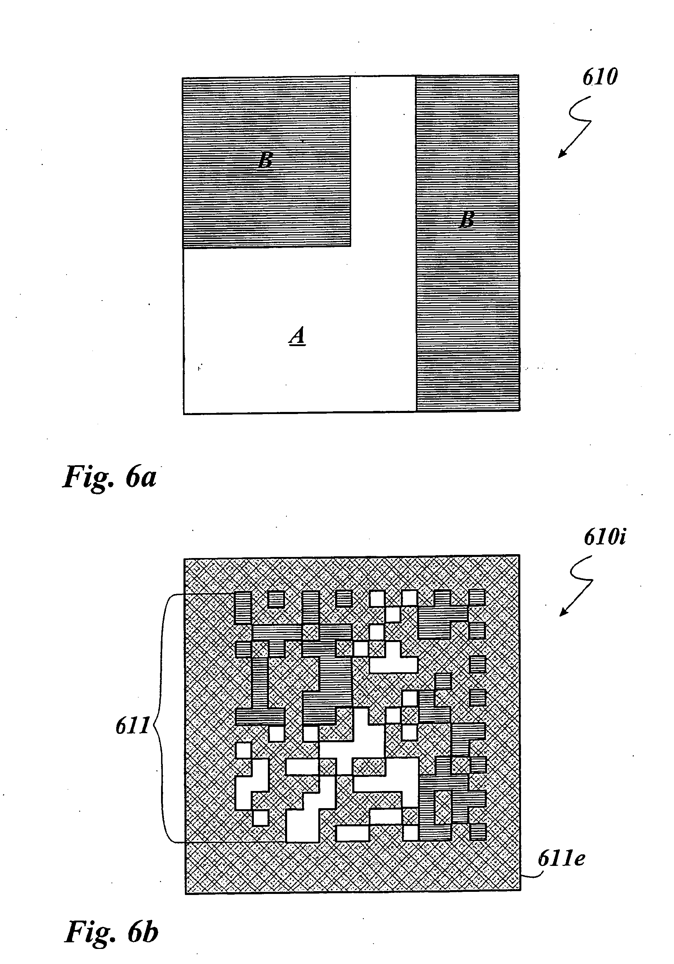

Die Fig. 6a und 6b zeigen nun ein drittes Ausführungsbeispiel eines erfindungsgemäßen Sicherheitsetements mit einem zweidimensionalen. Informationsfeld 610, aus dem durch Aufbringen eines zweidimensionalen Barcodes 611 ein individualisiertes Informationsfeld 611 i herstellbar ist.

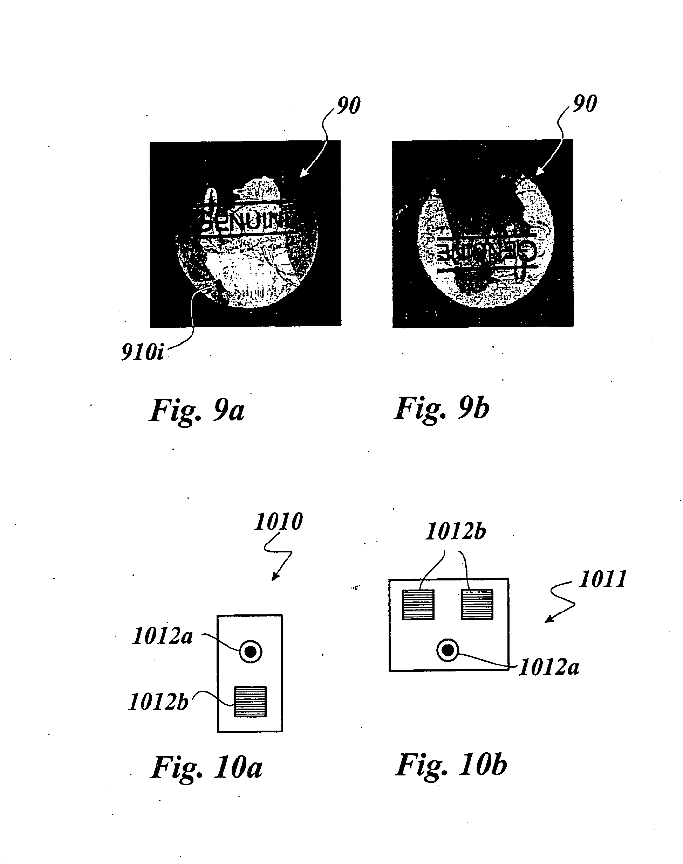

Das in Fig. 6a dargestellte Informationsfeld 610 weist ein einfaches geometrisches Muster auf, das aus Bereichen mit der Reliefstruktur A und Bereichen mit der Reliefstruktur B gebildet ist und als Hintergrundmuster für den Barcode 610i dient. Das Hintergrundmuster ist in weiten Grenzen variierbar, sofern gesichert ist, daß es mit Hilfe eines computergestützten Bilderfassungsprogramms identifizierbar ist. Es kann sich also auch um ein komplexes visuell erkennbares Muster handeln, wie in dem weiter unten in den Fig. 9a und 9b dargestellten Ausführungsbeispiel, das ein stilisiertes Profil der Literaturgestalt Sherlock Holmes zeigt. Ein solches Hintergrundmuster kann außerdem anhand seines optischen Eindrucks visuell zumindest grob verifiziert werden. Anstatt einer bildlichen Darstellung können beispielsweise auch ein oder mehrere alphanumerische Zeichen, wie beispielsweise ein Landescode wie "CHE" oder "USA", oder ein Logo, wie beispielsweise ein Schlüssel oder das Schweizer Kreuz, vorgesehen sein.

Fig. 6b zeigt nun das individualisierte Informationsfeld 610i, auf das der zweidimensionale Barcode 611 aufgebracht ist. Der Barcode 611 ist in dem in Fig. 6b dargestellten Ausführungsbeispiel durch Laser-Ablation erzeugt, indem in den Bereichen der Informationsspur 610, die nicht von dem Barcode 611 bedeckt sind, die Reflexionsschicht entfernt ist. Der Barcode 611 ist allseitig von einem Randstreifen umgeben. Die durch Laserbestrahlung abgetragenen Bereiche 611e sind in der Fig. 6b durch eine Kreuzschraffur hinterlegt dargestellt. Der in Fig. 6b dargestellte Code ist stellvertretend für die zahlreichen Codes, die in internationalen Standards, wie zum Beispiel Data Matrix ECC200, PDF417 und Maxi Code, definiert sind.

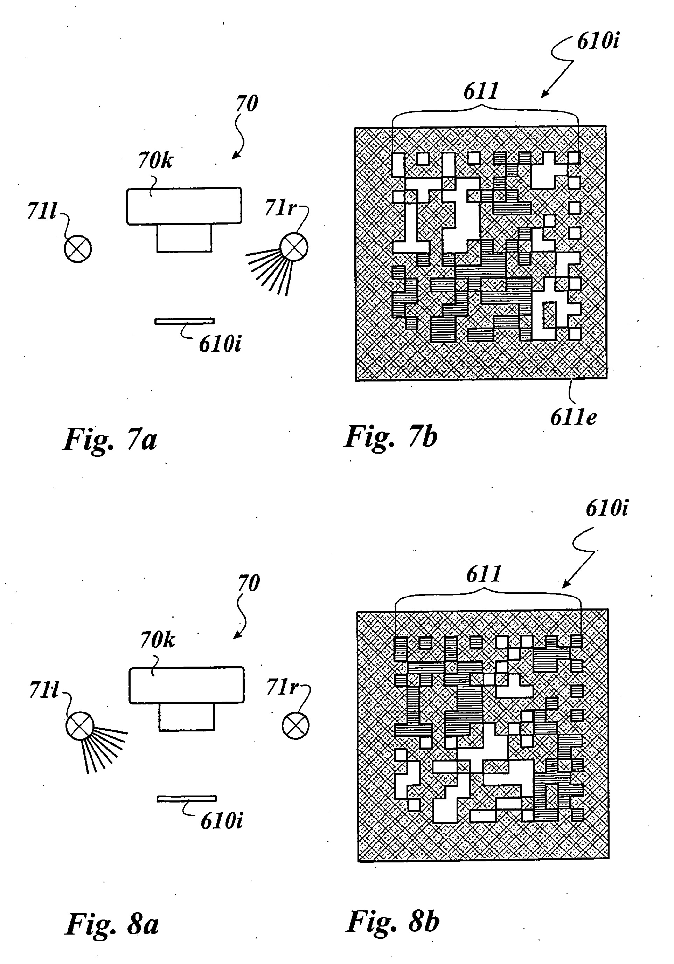

Die Fig. 7a bis 8b zeigen nun ein zum Auslesen der Information aus dem Informationsfeld 610i in Fig. 6b geeignetes Wirkprinzip.

Fig. 7a zeigt ein Lesegerät 70, das aus einer elektronischen Kamera 70k und zwei streifenförmigen Lichtquellen 71l und 71r gebildet ist. Die elektronische Kamera 70k weist einen 2D-Sensor auf, bei dem es sich beispielsweise um einen matrixförmigen Sensor handeln kann. Es kann alternativ auch ein zeilenförmiger oder punktförmiger Sensor vorgesehen sein, der mit einem geeigneten Ablenksystem verbunden ist oder der so bewegbar ist, daß er jeden Punkt eines zweidimensionalen Feldes abtasten kann. Die elektronische Kamera 70k ist über dem individualisierten Informationsfeld 610i angeordnet.

Die Lichtquellen 711 und 71 r sind mit einem nicht dargestellten Wechselschalter verbunden, so daß entweder die Lichtquelle 71 r oder die Lichtquelle 71l eingeschaltet sein kann. In Fig. 7a ist die Lichtquelle 71 r eingeschaltet. Die von der Lichtquelle 71 r ausgehenden Strahlen treffen schräg auf die Oberfläche des Informationsfelds 610i und werden von den Bereichen, welche die Reliefstruktur B aufweisen, in das Objektiv der Kamera 70k gebeugt. Sie erscheinen deshalb in der Draufsicht auf das Informationsfeld 610i als helle Flächen. Die mit der Reliefstruktur A ausgebildeten Bereiche werden im wesentlichen nur durch Streulicht aufgehellt und erscheinen deshalb als dunkle Bereiche, die sich nur wenig oder gar nicht von den Bereichen abheben, in denen die Reflexionsschicht durch Laser-Ablation entfernt ist.

Fig. 8a zeigt die in Fig. 7a dargestellte Anordnung mit eingeschalteter Lichtquelle 71l. Die von der Lichtquelle 71 r ausgehenden Strahlen treffen schräg auf die Oberfläche des Informationsfelds 610i und werden von den Bereichen, welche die Reliefstruktur A aufweisen, in das Objektiv der Kamera 70k gebeugt. Sie erscheinen nunmehr, wie in Fig. 8b dargestellt, in der Draufsicht auf das Informationsfeld 610i als helle Flächen, während die mit der Reliefstruktur B ausgebildeten Bereiche im wesentlichen nur durch Streulicht aufgehellt werden und deshalb als dunkle Bereiche erscheinen, die sich nur wenig oder gar nicht von den Bereichen abheben, in denen die Reflexionsschicht durch Laser-Ablation entfernt ist.

Die gesamte in dem Barcode 611 gespeicherte Information kann aus der Überlagerung beider Teilbilder des Informationsfeldes 610i ermittelt werden, wobei die Verteilung der Reliefstrukturen A und B in dem Informationsfeld 610i zur Authentifizierung dieser Information dienen kann. Ein weiterer Vorteil der in diesem Ausführungsbeispiel beschriebenen Anordnung ist die hohe Unempfindlichkeit gegenüber Toleranzen und Verschmutzungen und/oder Beschädigungen. Insbesondere, wenn die Ausbildung des als Hintergrund für den Barcode 611 verwendeten Informationsfeldes 610 (siehe Fig. 6a) bekannt ist, können Störungen sehr einfach eliminiert werden.

Die Anordnung ist weiter unempfindlich gegen Alterung oder Lagetoleranzen der Lichtquellen 71l und 71r, weil die beiden von der Kamera 70k erzeugten Teilbilder unter Einbeziehung des Informationsfeldes 610 elektronisch auf gleiche Helligkeit normiert werden können.

Die Fig. 9a und 9b zeigen nun photographische Aufnahmen Fig. 9a und 9b von einem erfindungsgemäßen Sicherheitselement 90 mit eingebetteter Informationsspur 910i, auch als "diffraktives Wasserzeichen" bezeichnet. Als visuelles Design ist ein Hologramm oder KINEGRAM^{®} gewählt, das ein stilisiertes Profil der Literaturgestalt Sherlock Holmes zeigt. Fig. 9a zeigt das Sicherheitselement 90 in aufrechter Position bei Betrachtung von der Vorderseite, Fig. 9b kopfstehend bei Betrachtung von der Rückseite.

Die in den vorgenannten Anwendungsbeispielen verwendeten Reliefstrukturen A und B können sich in ihren Polarisationseigenschaften und/oder in ihrer Gitterperiode und/oder in ihrer Gitterrichtung und/oder in ihrer Gitterform und/oder in ihrer Gittertiefe voneinander unterscheiden und auf diese Weise für optische Lesegeräte detektierbar sein. Bei den Reliefstrukturen kann es sich auch um computergenerierte Hologramme handeln. Diese Vielzahl der Variationsmöglichkeiten erschwert zusätzlich unerlaubte Kopien oder kann die Verifizierung auf speziell ausgebildete und/oder der Allgemeinheit nicht zugängliche Lesegeräte beschränken, wobei das Auslesen der Information des Barcodes mit handelsüblichen Lesegeräten möglich sein kann. Die Reliefstrukturen können auch auf einen Bildschirm projiziert werden und eine CCD-Kamera kann die Bildschirmdarstellung erfassen. Es ist also möglich, bei der Ausbildung des Lesegerätes sehr flexibel zu sein.

Die Fig. 10a und 10b zeigen nun als Hintergrund verwendbare Informationsfelder 1010 und 1011, die computergenerierte Hologramme 1012a und 1012b aufweisen, die sich optisch voneinander unterscheiden. Wegen der Eigenschaft der Hologramme, daß jeder Teilbereich des Hologramms die Information des Hologramms wiederzugeben vermag, können Hologramme zur weiteren Erhöhung der Toleranzunempfindlichkeit beitragen. Die Hologramme tragen weiter zur Erhöhung der Fälschungssicherheit bei, denn ein Hologramm ist nur mit sehr hohem Aufwand nachzuahmen.

## Patentansprüche

1. Mehrschichtkörper mit einer optisch maschinell lesbaren Kennung, wobei der Mehrschichtkörper mindestens eine erste Kunststoffschicht mit einer in dieser Schicht abgeformten mikroskopisch feinen Reliefstruktur aufweist und die optische Wirkung der mikroskopisch feinen Reliefstruktur bereichsweise zum Einschreiben einer Information veränderbar ist,
wobei der Mehrschichtkörper (10i, 510i, 610i) eine Vielzahl von ersten und zweiten Bereichen aufweist,
wobei in den ersten Bereichen eine mikroskopisch feine erste Reliefstruktur und in den zweiten Bereichen eine von dieser unterschiedliche, eine unterschiedliche optische maschinell erfaßbare Wirkung aufweisende mikroskopische feine zweite Reliefstruktur in die erste Kunststoffschicht abgeformt ist,
wobei die ersten und die zweiten Bereiche (1 bis 7) im Bereich der optisch maschinell lesbaren Kennung in Form eines eine erste Information kodierenden Hintergrundmusters angeordnet sind,
**dadurch gekennzeichnet,**
**daß** im Bereich der optisch maschinell lesbaren Kennung die optische Wirkung der mikroskopisch feinen Reliefstrukturen in erste und/oder zweite Bereiche zumindest partiell überdeckenden dritten Bereichen (1i bis 3i) zum Einschreiben eines eine individualisierte zweite Information codierenden, das Hintergrundmuster überlagernden individualisierten Codemusters dadurch verändert ist, daß in den nicht dem individualisierten Codemuster zugeordneten Bereichen der optisch maschinell lesbaren Kennung eine Reflexionsschicht oder eine optische Trennschicht des Mehrschichtkörpers durch thermische Einwirkung entfernt ist oder in ihrer optischen Wirkung verändert ist oder die Reliefstruktur verändert ist oder ein thermochromer Farbstoff einer Schutzschicht des Mehrschichtkörpers aktiviert ist.

2. Mehrschichtkörper nach Anspruch 1 ,
**dadurch gekennzeichnet,**
**daß** in einem Bereich, der ein Bit des individualisierten Codemusters mit dem Wert "1" repräsentiert, die Reflexionsschicht oder die optische Trennschicht entfernt oder optisch verändert ist oder von einer opaken Schicht überdeckt ist oder die Reliefstruktur verändert ist.

3. Mehrschichtkörper nach Anspruch 1 ,
**dadurch gekennzeichnet,**
**daß** in einem Bereich, der ein Bit des individualisierten Codemusters mit dem Wert "0" repräsentiert, die Reflexionsschicht oder die optische Trennschicht entfernt oder verändert ist oder von einer opaken Schicht überdeckt ist oder die Reliefstruktur verändert ist.

4. Mehrschichtkörper nach einem der vorhergehenden Ansprüche,
**dadurch gekennzeichnet,**
**daß** einem ersten und/oder zweiten Bereich des eine erste Information kodierenden Hintergrundmusters eine Vielzahl von dritten Bereichen des eine individualisierte zweite Information kodierenden individualisierten Codemusters zugeordnet ist.

5. Mehrschichtkörper nach einem der vorhergehenden Ansprüche,
**dadurch gekennzeichnet,**
**daß** es sich bei dem individualisierten Codemuster um einen eindimensionalen Barcode handelt.

6. Mehrschichtkörper nach einem der Ansprüche 1 bis 4,
**dadurch gekennzeichnet,**
**daß** es sich bei dem individualisierten Codemuster um einen zweidimensionalen Barcode handelt.

7. Mehrschichtkörper nach einem der vorhergehenden Ansprüche,
**dadurch gekennzeichnet,**
**daß** die erste und die zweite Reliefstruktur asymmetrische Reliefstrukturen sind.

8. Mehrschichtkörper nach Anspruch 7,
**dadurch gekennzeichnet,**
**daß** die erste und die zweite Reliefstruktur einen unterschiedlichen k-Vektor aufweist.

9. Mehrschichtkörper nach Anspruch 8,
**dadurch gekennzeichnet,**
**daß** sich die Richtung des k-Vektors der ersten Reliefstruktur von der Richtung des k-Vektors der zweiten Reliefstruktur um 180° unterscheidet.

10. Mehrschichtkörper nach Anspruch 7,
**dadurch gekennzeichnet,**
**daß** die erste und die zweite Reliefstruktur eine unterschiedliche Gitterperiode aufweisen.

11. Mehrschichtkörper nach Anspruch 7,
**dadurch gekennzeichnet,**
**daß** die erste und die zweite Reliefstruktur eine unterschiedliche Gitterform aufweisen.

12. Mehrschichtkörper nach Anspruch 7,
**dadurch gekennzeichnet,**
**daß** die erste und die zweite Reliefstruktur eine unterschiedliche Gittertiefe aufweisen.

13. Mehrschichtkörper nach Anspruch 7,
**dadurch gekennzeichnet,**
**daß** die erste und die zweite Reliefstruktur einen durch Streuung und/oder Reflexion hervorgerufenen unterschiedlichen Polarisationseffekt aufweisen.

14. Mehrschichtkörper nach einem der Ansprüche 1 bis 6,
**dadurch gekennzeichnet,**
**daß** die erste und die zweite Reliefstruktur als Hologramm oder KINEGRAM^{®} oder als Teil eines Hologramms oder KINEGRAM^{®} ausgebildet sind.

15. Mehrschichtkörper nach einem der vorhergehenden Ansprüche,
**dadurch gekennzeichnet,**
**daß** die ersten und zweiten Bereiche ein graphisches Muster bilden oder Teil eines graphischen Musters sind.

16. Verfahren zur Herstellung eines Mehrschichtkörpers mit einer optisch maschinell lesbaren Kennung, wobei der Mehrschichtkörper mindestens eine erste Kunststoffschicht mit in dieser Schicht abgeformten mikroskopisch feinen Reliefstrukturen aufweist und die optische Wirkung der mikroskopisch feinen Reliefstrukturen bereichsweise zum Einschreiben einer Information veränderbar ist,
**dadurch gekennzeichnet,**
**daß** in den Mehrschichtkörper (10, 510, 610) eine optisch maschinell lesbare Kennung in Form eines eine erste Information codierenden Hintergrundmusters eingebracht wird, wobei in den Mehrschichtkörper (10, 510, 610) eine Vielzahl von ersten Bereichen mit einer mikroskopisch feinen ersten Reliefstruktur abgeformt wird und eine Vielzahl von zweiten Bereichen mit einer von dieser unterschiedlichen, eine unterschiedliche optische maschinell erfaßbare Wirkung aufweisenden mikroskopisch feinen zweiten Reliefstruktur abgeformt wird, wobei die erste und die zweite Reliefstruktur mit einer optisch wirksamen Reflexionsschicht oder einer optischen Trennschicht versehen werden; daß im Bereich der optisch maschinell lesbaren Kennung die optische Wirkung der mikroskopisch feinen Reliefstrukturen in erste und/oder zweite Bereiche zumindest partiell überdeckenden dritten Bereichen zum Einschreiben eines eine individualisierte zweite Information kodierenden, das Hintergrundmuster überlagernden individualisierten Codemusters verändert wird; und daß das individualisierte Codemuster dadurch gebildet wird, daß in den nicht dem individualisierten Codemuster zugeordneten Bereichen der optisch maschinell lesbaren Kennung die Reflexionsschicht oder die optische Trennschicht durch thermische Einwirkung entfernt oder in ihrer optischen Wirkung verändert wird oder die Reliefstruktur verändert wird oder ein thermochromer Farbstoff einer Schutzschicht aktiviert wird.

17. Verfahren nach Anspruch 16,
**dadurch gekennzeichnet,**
**daß** das individualisierte Codemuster durch thermische Einwirkung gebildet wird, wobei die Reflexionsschicht oder die optische Trennschicht entfernt oder in ihrer optischen Wirkung verändert wird oder die Reliefstruktur verändert wird oder der thermochrome Farbstoff der Schutzschicht aktiviert wird oder eine transparente Schutzschicht in eine opake Schutzschicht überführt wird.

18. Verfahren nach Anspruch 16 oder 17,
**dadurch gekennzeichnet,**
**daß** das individualisierte Codemuster durch Aufdrucken einer opaken Schicht gebildet wird.

19. Verfahren nach Anspruch 16 oder 17,
**dadurch gekennzeichnet,**
**daß** auf nicht dem individualisierten Codemuster zugeordnete Bereiche der optisch maschinell lesbaren Kennung eine opake Schicht aufgedruckt wird.

20. Verfahren nach einem der Ansprüche 16 bis 19,
**dadurch gekennzeichnet,**
**daß** das individualisierte Codemuster eine Information bereitstellt, die aus einer individualisierten Information und aus einem aus der individualisierten Information berechneten Prüfcode gebildet ist.

21. Verfahren nach einem der Ansprüche 16 bis 19,
**dadurch gekennzeichnet,**
**daß** das individualisierte Codemuster mit einem Start- und/oder Stop-Abschnitt versehen wird.

22. Verfahren nach einem der Ansprüche 16 bis 21,
**dadurch gekennzeichnet,**
**daß** die erste Information zur Charakterisierung eines Sicherheitsdokuments verwendet wird.

23. Verfahren nach Anspruch 22,
**dadurch gekennzeichnet,**
**daß** die erste Information die Art und/oder den Verwendungszweck und/oder die Herkunft des Sicherheitsdokuments umfaßt.

24. Verfahren zum Auslesen einer ersten und einer zweiten Information aus einem Mehrschichtkörper mit einer optisch maschinell lesbaren Kennung, die eine Vielzahl von ersten und zweiten Bereichen aufweist, wobei die zweiten Bereiche eine andere maschinell erfaßbare optische Wirkung als die ersten Bereiche aufweisen und die ersten und die zweiten Bereiche im Bereich der optisch maschinell lesbaren Kennung in Form eines eine aus einer Mustermenge ausgewählte erste Information kodierenden Hintergrundmusters angeordnet sind, wobei die Elemente der Mustermenge die gleiche Codestruktur aufweisen und wobei im Bereich der optisch maschinell lesbaren Kennung erste und/oder zweite Bereiche zumindest partiell überdeckende dritte Bereiche ein eine individualisierte zweite Information codierendes, das Hintergrundmuster überlagerndes individualisiertes Codemuster bilden, dessen optische Wirkung von der optischen Wirkung der ersten und der zweiten Bereiche verschieden ist, **dadurch gekennzeichnet,**
**daß** mit einer optoelektronischen Leseeinrichtung (70) von der ersten Reliefstruktur ein erstes elektronisches Abbild erzeugt wird, aus dem ein erstes Signalmuster generiert wird und von der zweiten Reliefstruktur ein zweites elektronisches Abbild erzeugt wird, aus dem ein zweites Signalmuster generiert wird; daß das erste und das zweite Signalmuster entsprechend der Codestruktur der Mustermenge abschnittsweise integriert werden; daß aus den integrierten Signalmustern die erste Information bestimmt wird; und daß durch betragsweise Addition des ersten und des zweiten Signalmusters die individualisierte zweite Information bestimmt wird.

25. Verfahren nach Anspruch 24,
**dadurch gekennzeichnet,**
**daß** der Mehrschichtkörper von einer Lichtquelle beleuchtet wird, und daß das erste und das zweite Signalmuster mit zwei beidseitig des Mehrschichtkörpers angeordneten Sensorzeilen oder Sensorarrays bestimmt werden.

26. Verfahren nach Anspruch 24,
**dadurch gekennzeichnet,**
**daß** der Mehrschichtkörper (610i) von zwei beidseitig des Mehrschichtkörpers (610i) angeordneten Lichtquellen (71l, 71r) beleuchtet und/oder durchleuchtet wird, und daß das erste und das zweite Signalmuster mit einer über und/oder unter dem Mehrschichtkörper (610i) angeordneten Sensorzeile oder einem Sensorarray bestimmt werden, wobei die beiden Lichtquellen (71l, 71r) alternierend in Betrieb gesetzt werden.

## Claims

1. Multi-layered body with an optically machine-readable character, whereby the multi-layered body comprises at least one first plastic layer with a microscopically fine relief structure formed in this layer, the optical effect of the microscopically fine relief structure being changeable area by area for registering a piece of information,
whereby the multi-layered body (10i, 510i, 610i) comprises a variety of first and second regions,
whereby, in the first regions, a microscopically fine first relief structure is formed in the first plastic layer, and a microscopically fine second relief structure differing from the latter, comprising a different optically machine-detectable effect is formed in the second regions,
whereby the first and second regions (1 to 7) are arranged in the region of the optically machine-readable character in the form of a background pattern coding a first piece of information,
**characterised in that**
in the region of the optically machine-readable character, the optical effect of the microscopically fine relief structures is changed in first and/or second regions at least partly covering third regions (1i to 3i) for registering an individualised code pattern coding an individualised second piece of information, overlaying the background pattern, by a reflection layer or an optical separating layer of the multi-layered body being removed by thermal influence, or being changed in its optical effect, or the relief structure being changed, or a thermo-chromic dye of a protective layer of the multi-layered body being activated in the regions of the optically machine-readable character which are not assigned to the individualised code pattern.

2. Multi-layered body according to claim 1,
**characterised in that**
in one region, which represents a binary digit of the individualised code pattern with the value `1', the reflection layer or the optical separating layer is removed or optically changed, or is covered by an opaque layer, or the relief structure is changed.

3. Multi-layered body according to claim 1,
**characterised in that**
in one region, which represents a binary digit of the individualised code pattern with the value '0', the reflection layer or the optical separating layer is removed or changed, or is covered by an opaque layer, or the relief structure is changed.

4. Multi-layered body according to any one of the preceding claims, **characterised in that**
a variety of third regions of the individualised code pattern coding an individualised second piece of information is assigned to a first and/or second region of the background pattern coding a first piece of information.

5. Multi-layered body according to any one of the preceding claims, **characterised in that**
the individualised code pattern concerns a one-dimensional barcode.

6. Multi-layered body according to any one of claims 1 to 4,
**characterised in that**
the individualised code pattern concerns a two-dimensional barcode.

7. Multi-layered body according to any one of the preceding claims, **characterised in that**
the first and second relief structure are asymmetrical relief structures.

8. Multi-layered body according to claim 7,
**characterised in that**
the first and second relief structure comprise a different k-vector.

9. Multi-layered body according to claim 8,
**characterised in that**
the direction of the k-vector of the first relief structure differs from the direction of the k-vector of the second relief structure by 180°.

10. Multi-layered body according to claim 7,
**characterised in that**
the first and second relief structure comprise a differing grating period.

11. Multi-layered body according to claim 7,
**characterised in that**
the first and second relief structure comprise a differing grid form.

12. Multi-layered body according to claim 7,
**characterised in that**
the first and second relief structure comprise a differing grating depth.

13. Multi-layered body according to claim 7,
**characterised in that**
the first and second relief structure have a differing polarisation effect caused by scattering and/or reflection.

14. Multi-layered body according to any one of claims 1 to 6,
**characterised in that**
the first and second relief structure are designed as a hologram or KINEGRAM® or as a part of a hologram or KINEGRAM®.

15. Multi-layered body according to any one of the preceding claims, **characterised in that**
the first and second regions form a graphical pattern or are a part of a graphical pattern.

16. Process for production of a multi-layered body with an optically machine-readable character, whereby the multi-layered body comprises at least one first plastic layer with microscopically fine relief structures formed in this layer, and the optical effect of the microscopically fine relief structures can be changed area by area for registering a piece information,
**characterised in that**
an optically machine-readable character in the form of a background pattern coding a first piece of information is introduced into the multi-layered body (10, 510, 610), whereby in the multi-layered body (10, 510, 610), a variety of first regions are formed with a microscopically fine first relief structure, and a variety of second regions are formed with a microscopically fine second relief structure differing from the latter, comprising a different optically machine detectable effect, whereby the first and second relief structure are provided with an optically acting reflection layer or an optical separating layer; that in the region of the optically machine-readable character, the optical effect of the microscopically fine relief structures is changed in first and/or second regions at least partly covering third regions for registering an individualised code pattern coding an individualised second piece of information, overlaying the background pattern; and that the individualised code pattern is formed in such a way that in the regions of the optically machine-readable character which are not assigned to the individualised code pattern, a reflection layer or the optical separating layer of the multi-layered body is removed by thermal influence, or is changed in its optical effect, or the relief structure is changed, or a thermo-chromic dye of a protective layer is activated.

17. Process according to claim 16,
**characterised in that**
the individualised code pattern is formed by thermal influence, whereby the reflection layer or the optical separating layer of the multi-layered body is removed, or is changed in its optical effect, or the relief structure is changed, or the thermo-chromic dye of the protective layer is activated, or a transparent protective layer is transferred into an opaque protective layer.

18. Process according to claim 16 or 17,
**characterised in that**
the individualised code pattern is formed by imprinting an opaque layer.

19. Process according to claim 16 or 17,
**characterised in that**
an opaque layer is imprinted on the regions of the optically machine-readable character which are not assigned to the individualised code pattern.

20. Process according to any one of claims 16 to 19,
**characterised in that**
the individual code pattern prepares a piece of information, which is formed from an individualised piece of information and from a verification code calculated from the individualised piece of information.

21. Process according to any one of claims 16 to 19,
**characterised in that**
the individualised code pattern is provided with a start section and/or stop section.

22. Process according to any one of claims 16 to 21,
**characterised in that**
the first piece of information is used for characterisation of a security document.

23. Process according to claim 22,
**characterised in that**
the first piece of information includes the type and/or purpose of use and/or source of the security document.

24. Process for read-out of a first and second piece of information from a multi-layered body with an optically machine readable character, which comprises a variety of first and second regions, whereby the second regions have a different optically machine-readable effect than the first region, and the first and second regions in the region of the optically machine readable character are arranged in the form of a background pattern coding a first piece of information selected from a sample quantity, whereby the elements of the sample quantity comprise the same code structure, and whereby in the region of the optically machine-readable character, first and/or second regions at least partially covering third regions form an individualised code pattern superimposed on the background pattern, coding an individualised second piece of information, whose optical effect is different from the optical effect of the first and second regions,
**characterised in that**
an electronic image of the first relief structure is generated with an optoelectronic reading device (70), from which a first signal pattern is generated, and a second electronic image is generated of a second relief structure, from which a second signal pattern is generated; that the first and second signal pattern corresponding to the code pattern of the sample quantity is integrated in sections; that the first information is determined from the integrated signal patterns; and that the individualised second information is determined by the addition of the first and second signal pattern.

25. Process according to claim 24,
**characterised in that**
the multi-layered body is illuminated by a light source, and that the first and second signal patterns are determined with two sensor lines or sensor arrays arranged on both sides of the multi-layered body.

26. Process according to claim 24,
**characterised in that**
the multi-layered body (610i) is illuminated or shone through by two light sources (71l, 71r) arranged on both sides of the multi-layered body (610i), and that the first and second signal patterns are determined with a sensor line or sensor array arranged above and/or below the multi-layered body (610i), whereby both light sources (71l, 71r) are used alternately.

## Revendications

1. Corps multicouche comprenant une identification pour lecture optique par machine, dans lequel le corps multicouche présente au moins une première couche de matière plastique avec une structure en relief de précision microscopique, moulée dans cette couche, et l'effet optique de la structure en relief de précision microscopique est localement variable pour inscrire une information,
dans lequel le corps multicouche (10i, 510i, 610i) présente une pluralité de premières et deuxièmes zones,
dans lequel une première structure en relief de précision microscopique est moulée dans les premières zones, et une deuxième structure en relief de précision microscopique, différente de celle-ci et présentant un effet optique différent décelable par machine, est moulée dans les deuxièmes zones, dans la première couche de matière plastique,
dans lequel les premières et les deuxièmes zones (1 à 7) sont disposées dans la zone de l'identification pour lecture optique par machine sous la forme d'un motif d'arrière-plan codant une première information,
**caractérisé en ce que**
dans la zone de l'identification pour lecture optique par machine, l'effet optique des structures en relief de précision microscopique est modifié dans des troisièmes zones (1i à 3i) recouvrant au moins en partie des premières et/ou deuxièmes zones pour inscrire un motif de code individualisé, superposé au motif d'arrière-plan et codant une deuxième information individualisée, **en ce que** dans les zones de l'identification pour lecture optique par machine, non attribuées au motif de code individualisé, une couche de réflexion ou une couche de séparation optique du corps multicouche est retirée par action thermique ou est modifiée au niveau de son effet optique, ou la structure en relief est modifiée, ou un colorant thermochromique d'une couche de protection du corps multicouche est activé.

2. Corps multicouche selon la revendication 1, **caractérisé en ce**
**que** dans une zone représentant un bit du motif de code individualisé de la valeur « 1 », la couche de réflexion ou la couche de séparation optique est retirée ou optiquement modifiée ou recouverte d'une couche opaque ou la structure en relief est modifiée.

3. Corps multicouche selon la revendication 1, **caractérisé en ce**
**que** dans une zone représentant un bit du motif de code individualisé de la valeur « 0 », la couche de réflexion ou la couche de séparation optique est retirée ou modifiée ou recouverte d'une couche opaque ou la structure en relief est modifiée.

4. Corps multicouche selon l'une quelconque des revendications précédentes,
**caractérisé en ce**
**qu'**une première et/ou deuxième zone du motif d'arrière-plan codant une première information se voi (en) t attribuer une pluralité de troisièmes zones du motif de code individualisé codant une deuxième information individualisée.

5. Corps multicouche selon l'une quelconque des revendications précédentes,
**caractérisé en ce**
**que** le motif de code individualisé est un code à barres unidimensionnel.

6. Corps multicouche selon l'une des revendications 1 à 4,
**caractérisé en ce**
**que** le motif de code individualisé est un code à barres bidimensionnel.

7. Corps multicouche selon l'une quelconque des revendications précédentes,
**caractérisé en ce**
**que** la première et la deuxième structure en relief sont des structures en relief asymétriques.

8. Corps multicouche selon la revendication 7, **caractérisé en ce**
**que** la première et la deuxième structure en relief présentent un vecteur k différent.

9. Corps multicouche selon la revendication 8, **caractérisé en ce**
**que** la direction du vecteur k de la première structure en relief est différente de 180° de la direction du vecteur k de la deuxième structure en relief.

10. Corps multicouche selon la revendication 7, **caractérisé en ce**
**que** la première et la deuxième structure en relief présentent une période de réseau différente.

11. Corps multicouche selon la revendication 7, **caractérisé en ce**
**que** la première et la deuxième structure en relief présentent une forme de réseau différente.

12. Corps multicouche selon la revendication 7,
**caractérisé en ce**
**que** la première et la deuxième structure en relief présentent une profondeur de réseau différente.

13. Corps multicouche selon la revendication 7,
**caractérisé en ce**
**que** la première et la deuxième structure en relief présentent un effet de polarisation différent, provoqué par dispersion et/ou par réflexion.

14. Corps multicouche selon l'une des revendications 1 à 6,
**caractérisé en ce**
**que** la première et la deuxième structure en relief sont réalisées sous forme d'hologramme ou de KINEGRAM® ou sous la forme d'une partie d'hologramme ou de KINEGRAM®.

15. Corps multicouche selon l'une quelconque des revendications précédentes,
**caractérisé en ce**
**que** les premières et deuxièmes zones forment un motif graphique ou font partie d'un motif graphique.

16. Procédé de fabrication d'un corps multicouche avec une identification pour lecture optique par machine, dans lequel le corps multicouche présente au moins une première couche de matière plastique avec des structures en relief de précision microscopique, moulées dans cette couche, et l'effet optique des structures en relief de précision microscopique est localement variable pour inscrire une information,
**caractérisé en ce**
**que** dans le corps multicouche (10, 510, 610), une identification pour lecture optique par machine est incorporée sous la forme d'un motif d'arrière-plan codant une première information, dans lequel une pluralité de premières zones avec une première structure en relief de précision microscopique et une pluralité de deuxièmes zones avec une deuxième structure en relief de précision microscopique, différente de celle-ci et présentant un effet optique différent décelable par machine sont moulées dans le corps multicouche (10, 510, 610), dans lequel la première et la deuxième structure en relief sont munies d'une couche de réflexion à effet optique ou d'une couche de séparation optique ; en ce que dans la zone de l'identification pour lecture optique par machine, l'effet optique des structures en relief de précision microscopique est modifié dans des troisièmes zones recouvrant au moins partiellement des premières et/ou deuxièmes zones pour inscrire un motif de code individualisé superposé au motif d'arrière-plan et codant une deuxième information individualisée ; et en ce que le motif de code individualisé est formé en ce que dans les zones de l'identification pour lecture optique par machine, non attribuées au motif de code individualisé, la couche de réflexion ou la couche de séparation optique est retirée par action thermique ou modifiée au niveau de son effet optique, ou la structure de relief est modifiée, ou un colorant thermochromique d'une couche de protection est activé.

17. Procédé selon la revendication 16,
**caractérisé en ce**
**que** le motif de code individualisé est formé par action thermique, dans lequel la couche de réflexion ou la couche de séparation optique est retirée ou modifiée au niveau de son effet optique, ou la structure en relief est modifiée, ou le colorant thermochromique de la couche de protection est activé, ou une couche de protection transparente est amenée à passer à une couche de protection opaque.

18. Procédé selon la revendication 16 ou 17,
**caractérisé en ce**
**que** le motif de code individualisé est formé par impression d'une couche opaque.

19. Procédé selon la revendication 16 ou 17,
**caractérisé en ce**
**qu'**une couche opaque est imprimée dans des zones de l'identification pour lecture optique par machine non attribuées au motif de code individualisé.

20. Procédé selon l'une des revendications 16 à 19,
**caractérisé en ce**
**que** le motif de code individualisé fournit une information qui se compose d'une information individualisée et d'un code de contrôle calculé à partir de l'information individualisée.

21. Procédé selon l'une des revendications 16 à 19,
**caractérisé en ce**
**que** le motif de code individualisé est muni d'une portion de marche et/ou d'arrêt.

22. Procédé selon l'une des revendications 16 à 21,
**caractérisé en ce**
**que** la première information est utilisée pour caractériser un document de sécurité.

23. Procédé selon la revendication 22,
**caractérisé en ce**
**que** la première information comprend le type et/ou l'affectation et/ou l'origine du document de sécurité.

24. Procédé de lecture d'une première et d'une deuxième information à partir d'un corps multicouche avec une identification pour lecture optique par machine présentant une pluralité de premières et deuxièmes zones, dans lequel les deuxièmes zones présentent un effet optique décelable par machine, différent des premières zones, et les premières et deuxièmes zones sont disposées dans la zone de l'identification pour lecture optique par machine sous la forme d'un motif d'arrière-plan codant une première information et sélectionné parmi un ensemble de motifs, dans lequel les éléments de l'ensemble de motifs présentent la même structure de code, et dans lequel, dans la zone de l'identification pour lecture optique par machine, des troisièmes zones recouvrant au moins en partie des premières et/ou deuxièmes zones forment un motif de code individualisé superposé au motif d'arrière-plan et codant une deuxième information individualisée, dont l'effet optique est différent de l'effet optique des premières et deuxièmes zones,
**caractérisé en ce**
**qu'**un lecteur optoélectronique (70) permet de générer à partir de la première structure en relief une première image électronique, à partir de laquelle est généré un premier motif de signal, et de générer à partir de la deuxième structure en relief une deuxième image électronique à partir de laquelle est généré un deuxième motif de signal ; en ce que le premier et le deuxième motif de signal sont localement intégrés selon la structure de code de l'ensemble de motifs ; en ce que la première information est déterminée à partir des motifs de signal intégrés ; et en ce que la deuxième information individualisée est déterminée par une addition de valeur des premier et deuxième motifs de signal.

25. Procédé selon la revendication 24,
**caractérisé en ce**
**que** le corps multicouche est éclairé par une source de lumière, et en ce que les premier et deuxième motifs de signal sont déterminés par deux rangées de capteurs ou réseaux de capteurs disposés des deux côtés du corps multicouche.

26. Procédé selon la revendication 24,
**caractérisé en ce**
**que** le corps multicouche (610i) est éclairé et/ou irradié par des sources de lumière (711, 71r) disposées des deux côtés du corps multicouche (610i), et en ce que le premier et le deuxième motif de signal sont déterminés par une rangée de capteurs ou un réseau de capteurs disposé(e) au-dessus et/ou au-dessous du corps multicouche (610i), dans lequel les deux sources de lumière (711, 71r) sont mises en service en alternance.
